# FASCICULE DE BREVET EUROPEEN

(11) **EP 1 042 886 B1**
(45) Date de publication et mention de la délivrance du brevet: **25.07.2001**
(21) Numéro de dépôt: 98962539.7
(22) Date de dépôt: 22.12.1998
(51) Int. Cl.: H04L 12/24

(54) **SYSTEME DE COMMUNICATION DE DONNEES UTILISANT UN MODELE HIERARCHIQUE DE RESEAU DEFINISSANT DES OBJETS LOGIQUES ET PHYSIQUES**
DATENKOMMUNIKATIONSSYSTEM MIT HIERARCHISCHEM NETZWERKMODEL ZUR DEFINITION VON LOGISCHEN UND PHYSIKALISCHEN OBJEKTEN
DATA COMMUNICATION SYSTEM USING A HIERARCHICAL NETWORK MODEL DEFINING LOGICAL AND PHYSICAL OBJECTS

(30) Priorité: 22.12.1997 FR 9716242
(43) Date de publication de la demande: 11.10.2000
(73) Titulaire: Datamedia, 31319 Labege Cedex (FR)
(72) Inventeur: BRAUNER, Vladimir, F-31140 Saint Alban (FR)
(74) Mandataire: Morelle, Guy Georges Alain
(86) Numéro de dépôt international: FR9802821
(87) Numéro de publication internationale: WO9933223

(56) Documents cités:
- EP-A- 0 737 920
- US-A- 4 713 806
- PATEL A ET AL: "INTRODUCTION TO NAMES, ADDRESSES AND ROUTES IN AN OSI ENVIRONMENT" COMPUTER COMMUNICATIONS, vol. 13, no. 1, 1 janvier 1990 (1990-01-01), pages 27-36, XP000100215
- GUENTHER W ET AL: "OBJECT-ORIENTED DESIGN OF ISDN CALL-PROCESSING SOFTWARE" IEEE COMMUNICATIONS MAGAZINE, vol. 31, no. 4, 1 avril 1993 (1993-04-01), pages 40-45, XP000359822
- COPLIEN J O ET AL: "C++: EVOLVING TOWARD A MORE POWERFUL LANGUAGE" AT & T TECHNICAL JOURNAL, SHORT HILLS, NJ, US, vol. 67, no. 4, juillet 1988 (1988-07), pages 19-32, XP000002597

## Description

La présente invention concerne un système de commutation de données.

Les systèmes de ce type connus actuellement, par exemple les autocommutateurs dans le domaine de la téléphonie, sont des dispositifs électroniques essentiellement câblés. Compte tenu de leur complexité considérable, ils sont extrêmement onéreux. En outre, ils présentent très peu de souplesse. En particulier, ils sont généralement dédiés à une seule application.

On connait le document EP.0 737 920 qui se rapporte à un procédé d'isolation d'un défaut de réseau à partir d'un système de gestion d'un réseau d'ordinateurs utilisant des modèles d'entités du réseau pour former un réseau virtuel. Le système de gestion comprend un réseau virtuel incluant une pluralité de modèles pour représenter les entités de réseau, chaque modèle contenant des données de réseau se rapportant à l'entité de réseau correspondante et des moyens pour traiter les données de réseau de manière à fournir des informations pour l'utilisateur. Le réseau virtuel inclut additionnellement des relations de modèles représentant les relations entre les entités de réseau. Le système inclut également des moyens pour transférer les données de réseau des entités de réseau aux modèles correspondants dans le réseau virtuel et des moyens pour fournir les informations d'utilisateur du réseau virtuel à un utilisateur. Les relations de modèles définissent des connexions de réseau entre les dispositifs de réseau et des rapports hiérarchiques entre les entités de réseau. Une condition d'alarme est générée quand les données de réseau rencontrent un critère prédéterminé. Un tel système de gestion permet uniquement une modélisation d'éléments physiques, et les objets manipulés sont représentatifs exclusivement d'une entité physique. La modélisation décrite dans ce document correspond exactement au réseau réel et est adaptée à une recherche automatique de pannes. Un tel système ne présente pas la souplesse nécessaire à une application à un système de commutation de données.

On connait également le document US 4,713,806 qui se rapporte aux parties de traitements d'appels et de gestions des ressources d'un dispositif de contrôle de système de communications, et plus particulièrement aux structures et coopération de ces parties pour fournir une variété de services à travers une variété de structures de systèmes. Le traitement des appels et les sous-ensembles de gestion des ressources sont réalisés de manière logicielle telle qu'ils fonctionnent sur une abstraction logique du système de communication physique. Dans un réseau numérique multiservices par exemple, comprenant des commutateurs large bande et bande étroite, un complexe de contrôle de réseau selon ce document comprend un dispositif de traitement d'appels contrôlé par un programme qui est indépendant d'un dispositif de gestion des ressources et du réseau physique. Le dispositif de traitement d'appels voit le réseau comme comprenant des canaux logiques. Il fait une distinction ou non entre les communications large bande et bande étroite ; s'il n'y a pas distinction, il répond aux messages des abonnés au téléphone demandant des fonctions d'abonnés pour des communications bande large et bande étroite par direction du dispositif de gestion de ressources à établir et à désassembler des routes d'appels logiques, et à créer et détruire des connexions physiques et logiques entre les canaux logiques et les routes d'appels logiques. Il peut y avoir deux sortes de ressources de réseau qu'un abonné peut requérir et manipuler : les appels et les conférences. Un tel système est un système de gestion informatisé d'objets physiques destiné à être intégré dans un autocommutateur de type conventionnel, et ne permet pas de se passer de ce dernier. Le système utilise en outre un modèle purement physique.

Il existe un besoin pour des systèmes de commutation de données qui soient aisément adaptables à différentes applications, tout en étant d'un coût raisonnable.

La présente invention vise à fournir un tel système, ainsi qu'à pallier les inconvénients des systèmes de l'art antérieur décrits ci-dessus, pouvant notamment être géré dans de nombreux cas par un simple micro-ordinateur.

A cet effet, l'invention a pour objet un système de commutation de données entre les terminaux d'un réseau de communication, comprenant des moyens de mémorisation et de gestion pour mémoriser un modèle dudit réseau et gérer ce modèle au cours de son évolution dans le temps, ledit modèle étant constitué par un ensemble d'objets qui sont représentatifs des éléments matériels du réseau à un instant donné et qui possèdent des propriétés définissant les caractéristiques de ces éléments à cet instant, des moyens de manipulation des objets aptes à créer de nouveaux objets, à modifier des objets existants, ou à supprimer des objets existants dans ledit modèle, et une interface entre les moyens de gestion et de mémorisation et lesdits éléments matériels du réseau, caractérisé par le fait que ledit modèle étant constitué d'une classe d'objets d'adressage logique comportant notamment des objets de type adresse, et d'une classe d'objets d'adressage physique, lesdites classes étant liées au niveau desdits objets de type adresse qui possèdent chacun parmi leurs propriétés une adresse logique et une adresse physique.

L'invention présente donc comme caractéristique essentielle de comporter un modèle composé d'objets représentatifs des éléments matériels du réseau, et un minimum de moyens pour agir sur ces objets, à savoir des commandes de création, de modification et de suppression d'objet.

Il est ainsi passible d'utiliser des moyens logiciels pour réaliser au moins les moyens de mémorisation et de gestion. Les moyens de manipulation d'objets peuvent eux-mêmes être intégrés à ces moyens logiciels pour répondre aux sollicitations matérielles en provenance des terminaux du réseau.

On observera également que le système selon l'invention peut être appliqué à d'autres domaines que celui de la téléphonie. C'est de ce dernier que seront tirés les exemples qui suivent, mais l'invention peut notamment être également appliquée à la gestion de réseaux d'imprimante, de visiophonie ou de télévision interactive.

Plus particulièrement, la classe d'objets d'adressage logique peut comprendre lesdits objets de type adresses formant les noeuds d'un graphe d'adressage logique, des liens formant des transitions dirigées entre une adresse logique source et une adresse logique cible du graphe d'adressage logique, des connexions constituées par un ensemble linéaire de liens connectés, et des appels constitués par l'association de plusieurs connexions.

On verra ci-après qu'une adresse peut posséder comme propriété, outre ses adresses logique et physique, une capacité définissant le nombre de connexions pouvant la référencer.

De même, un lien peut posséder comme propriété, outre les références à son adresse source et à son adresse cible, une capacité définissant le nombre de connexions pouvant le traverser.

Également dans un mode de réalisation particulier, une connexion possède comme propriété un état, caractéristique de l'avancement de son évolution. Elle possède en outre comme propriété une référence à l'appel auquel elle est associée.

Plus particulièrement, une connexion peut être en cours de routage logique, en cours de routage physique, en attente d'établissement, les routages logique et physique étant terminés, établie, ou en cours de suppression. La propriété d'état définit cette caractéristique.

Enfin, un appel peut posséder comme propriété une liste des connexions qu'il associe.

En ce qui concerne la classe d'objets d'adressage physique, elle peut comprendre des périphériques, objets capables de gérer un certain nombre de canaux, ces canaux, aptes à décrire une communication physique et associés chacun à un périphérique, et des multiplex, définissant la capacité d'un canal à être associé à zéro, une ou plusieurs connexions.

Dans un mode de réalisation particulier, la classe d'objets d'adressage physique peut en outre comprendre des routes sortantes, agencées pour associer un ensemble d'adresses physiques à un ensemble ordonné de périphériques.

L'adresse physique associée à une route sortante est calculée, pour une connexion, en fonction de son chemin d'adressage dans le graphe d'adressage logique.

Dans un mode de réalisation particulier, un périphérique possède comme propriété une capacité définissant le nombre maximal de canaux qu'il est susceptible de gérer. A titre d'exemple, ce nombre est de un pour une ligne téléphonique non multiplexée.

Également dans un mode de réalisation particulier, un canal possède comme propriétés une adresse locale et une adresse distante définissant les deux adresses d'extrémité de la communication physique qu'il décrit. Il comporte également une liste des connexions qui le traversent. On verra qu'une seule de ces connexions peut être active à la fois.

L'invention a également pour objet un procédé d'exploitation du système décrit ci-dessus.

Selon l'invention, un procédé de gestion d'un appel sortant à l'aide d'un système de commutation de données modélisé sous une forme comprenant:
- une classe d'objets d'adressage physique incluant des périphériques, objets capables de gérer un certain nombre de canaux, ces canaux, aptes à décrire une communication physique et associés chacun à un périphérique, et des multiplex, définissant la capacité d'un canal à être associé à zéro, une ou plusieurs connexions,
- une classe d'objets d'adressage logique incluant des objets de type adresses formant les noeuds d'un graphe d'adressage logique, des liens formant des transitions dirigées entre une adresse logique source et une adresse logique cible du graphe d'adressage logique, et des connexions constituées par un ensemble linéaire de liens connectés,
- lesdites classes étant liées au niveau desdits objets de type adresse qui possèdent chacun parmi leurs propriétés une adresse logique et une adresse physique,
ledit procédé, lorsqu'une communication doit être établie vers une adresse physique donnée, comprend les étapes consistant à:
- sélectionner une route sortante en fonction de ladite adresse physique donnée;
- choisir un périphérique parmi l'ensemble défini par la route sortante sélectionnée;
- rechercher un multiplex associé à ladite adresse physique donnée;
- spécifier à partir de ce multiplex combien de connexions peuvent être établies sur un même canal; et
- affecter l'appel à un canal déjà établi si le multiplex trouvé a une capacité strictement supérieure à 0, et qu'un canal est déjà créé vers ladite adresse physique donnée, pour l'un des périphériques de la route sortante sélectionnée; ou
- créer (27) un nouveau canal dans le cas contraire.

Un appel entrant est géré de la même manière, à l'exception des étapes consistant à sélectionner une route sortante et à en déduire un périphérique associé.

On décrira maintenant, à titre d'exemple non limitatif, un mode de réalisation particulier de l'invention, en référence aux dessins schématiques annexés dans lesquels:
- la figure 1 est un schéma d'ensemble d'un système de commutation de données selon l'invention;
- la figure 2 représente un exemple des moyens d'adressage logique du système selon l'invention;
- la figure 3 illustre le principe des moyens d'adressage physique de ce système;
- les figures 4a à 4f illustrent au niveau logique différentes étapes d'une communication téléphonique gérée par un système selon l'invention; et
- la figure 5 est un organigramme représentant l'algorithme de gestion d'un appel sortant.

### Architecture d'ensemble.

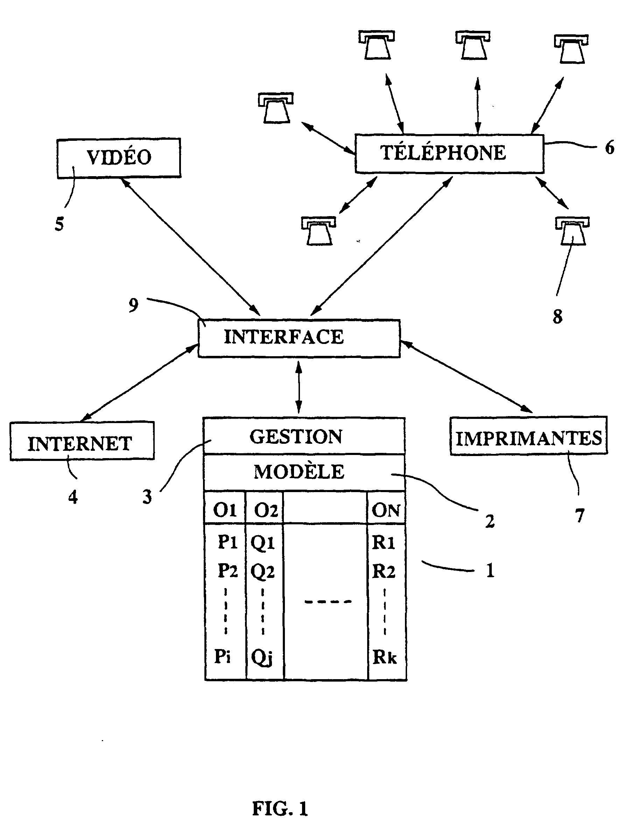

On voit à la figure 1 l'architecture générale d'un système selon l'invention.

Ce système comprend en premier lieu des moyens de mémorisation et de gestion formant un noyau 1. Le noyau 1 est composé d'un module de mémorisation 2 et d'un module de gestion 3.

Le module de mémorisation 2 est composé pour l'essentiel d'une mémoire de stockage d'un modèle constitué d'objets Oi munis de propriétés Pj. On peut considérer pour leur traitement les objets Oi comme des vecteurs de coordonnées Pj.

Le module de gestion 3 consiste en des moyens de calcul agencés pour assurer la cohérence du modèle stocké au cours de son évolution dans le temps. Le module 3 a également pour fonction d'informer les périphériques qui seront décrits ci-après de l'état du modèle.

Le noyau 1 est avantageusement réalisé sous la forme d'un micro-ordinateur. Il peut toutefois être plus ou moins partiellement câblé. A l'inverse, il pourrait être entièrement intégré sur un circuit semi-conducteur spécialisé.

Le modèle stocké dans le module de mémorisation 2 est représentatif du réseau sur lequel des données doivent être commutées par le système selon l'invention. Plus particulièrement, les différents objets Oi sont représentatifs des éléments de ce réseau, les propriétés Pj de ces objets définissant les caractéristiques de ces éléments à un instant donné.

Le réseau précité peut véhiculer tout type de données. On a montré à la figure 1 un tel réseau comportant une composante internet 4, une composante de transmission de signaux vidéo 5, une composante téléphonique 6, et une composante 7 constituée par un réseau d'imprimantes.

Chacune de ces composantes est dotée d'un certain nombre de terminaux. Seuls sont ici représentés les terminaux de la composante téléphonique, constitués par des postes 8.

Un module 9 assure l'interface entre le noyau 1 et les composantes 4-8. Cet interface peut être matériellement intégré au noyau 1.

Le module d'interface 9 a pour fonction de générer des commandes de modifications du modèle en réponse à des événements affectant les éléments matériels du réseau, en particulier les terminaux tels que 8. Pour des postes téléphoniques, ces événements sont par exemple le décrochage, la composition d'un numéro, la mise en attente d'une ligne, ou la composition du préfixe de transfert à un autre poste du réseau (ou hors du réseau, car une des conséquences de l'invention appliquée à la téléphonie est la non distinction entre les postes intérieurs et les postes extérieurs).

Seules trois commandes opérationnelles permettent de gérer le système, en sus d'éventuelles commandes de simple visualisation telle qu'une commande de listage d'objets. Il s'agit des commandes de création d'un objet, de modification d'un objet, ou plus précisément d'une au moins de ses propriétés, et de suppression d'un objet. Ces commandes constituent des moyens de manipulation des objets du modèle.

L'interface 9 transmet également, dans l'autre sens, des commandes aux terminaux, par exemple une commande de sonnerie.

On observera que l'on n'a pas distingué sur la figure 1, au sein de l'interface, les fonctions d'interface électronique proprement dite, et les fonctions de génération des commandes de création, de modification et de suppression d'objet. Une autre possibilité consisterait à intégrer la fonction de génération des commandes au noyau 1, et à ne conserver au module 9 que la fonction d'interface au sens strict.

Le modèle mémorisé dans le module de mémorisation 2 comporte deux types d'objets appartenant soit à une classe d'adressage logique, soit à une classe d'adressage physique.
Les objets d'adressage logique relèvent d'un graphe d'adressage logique représentatif du réseau mais, sont sans relation directe avec les éléments matériels de celui-ci. C'est en particulier cette caractéristique qui donne sa souplesse au système selon l'invention.

Les objets d'adressage physique sont en revanche directement représentatifs de ces éléments matériels. La correspondance entre objets d'adressage logique et objets d'adressage physique s'effectue au niveau des propriétés de certains objets, et en particulier des objets de type adresse qui seront décrits ci-après et qui possèdent chacun parmi leurs propriétés une adresse logique et une adresse physique.

### Les objets du modèle.

On décrira maintenant en détail les principaux objets du modèle, avec leurs propriétés principales et les commandes CRÉER et MODIFIER qui sont accessibles pour chacune de ces propriétés. La commande SUPPRIMER n'est accessible que pour l'ensemble de l'objet.

### Les objets d'adressage logique.

Ces objets sont de quatre types: les adresses, les liens, les connexions et les appels.
- Une **adresse** est un noeud du graphe d'adressage logique. Le tableau I ci-dessous indique ses propriétés principales et en donne les caractéristiques.
Une adresse possède en premier lieu une expression régulière d'identification (id) qui permet de la désigner symboliquement par un ou plusieurs noms.
Ses adresses logique (adresse) et physique (adressePhysique) permettent de mettre en correspondance les niveaux logique et physique du modèle.
Sa capacité est le nombre de connexions qui peuvent passer par l'adresse. Typiquement, en téléphonie, le dépassement de capacité d'une adresse correspond au cas de la tonalité occupée. On se trouve sinon soit dans le cas de la sonnerie d'appel, soit dans le cas du message d'attente.
L'algorithme de sélection des appels (routage) permet de choisir, parmi une pluralité d'appels arrivant à l'adresse, celui qui sera sélectionné.
De même, l'algorithme de distribution détermine, lorsqu'un appel arrive à une adresse possédant une pluralité d'adresses filles, celle vers laquelle l'appel sera dirigé. Ceci est par exemple le cas lorsque l'adresse à laquelle arrive l'appel est celle d'un pool d'opérateurs. L'appel est alors par exemple dirigé vers celui des opérateurs ayant eu le plus faible temps de connexion. Ou encore, un critère de langue peut être utilisé pour choisir l'opérateur.
On observera que l'ensemble des propriétés à l'exception de l'identificateur peuvent être fixées lors de la création de l'objet et ultérieurement modifiées (cf. les x dans les colonnes Ressources Créer et Ressources Modifier).

**Tableau I**

| ADRESSE | | | |
|---|---|---|---|
| Propriété | Caractéristique | Ressources | |
| | | Créer | Modifier |
| id | Identificateur | | |
| adresse | Adresse logique | x | x |
| capacité | Capacité | x | x |
| routage | Algorithme de sélection des appels | x | x |
| offreMultiple | Algorithme de distribution | x | x |
| adressePhysique | Adresse physique | x | x |

- Un lien (Tableau II) est une transition dirigée du graphe d'adressage logique. Il associe donc deux adresses logiques du graphe, à savoir une adresse source à une adresse cible. Il possède un identificateur. Sa capacité définit le nombre de connections pouvant passer par le lien.

**Tableau II**

| LIEN | | | |
|---|---|---|---|
| Propriété | Caractéristique | Ressources | |
| | | Créer | Modifier |
| id | Identificateur | | |
| source | Adresse source | x | x |
| cible | Adresse cible | x | x |
| capacité | Capacité | x | x |

- Une **connexion** (Tableau III) est un ensemble de liens connectés du graphe d'adressage logique (un chemin de routage). Elle est associée à un appel. Comme tous les objets, une connexion possède un identificateur. Deux propriétés définissent l'appel auquel la connexion est associée et le canal qu'elle traverse. Une autre propriété indique le périphérique qui gère ce canal. La propriété direction permet de n'autoriser le transfert des données que dans une seule direction. Ceci correspond à l'écoute discrète en téléphonie.

L'adresse courante est celle à laquelle aboutit la connexion à un instant donné. Elle peut différer de l'adresse initiale, par exemple en cas de renvoi ou de distribution dans un centre d'appel. Le drapeau de sélection est une propriété booléenne par laquelle une connexion est sélectionnée. Par convention, une seule connexion au maximum peut être sélectionnée parmi celles qui sont associées à un même canal. En téléphonie, la "désélection" correspond à la mise en garde d'une communication.

**Tableau III**

| CONNEXION | | | |
|---|---|---|---|
| Propriété | Caractéristique | Ressources | |
| | | Créer | Modifier |
| id | Identificateur | | |
| appelld | Appel associé | x | |
| direction | Direction des données | x | x |
| adresse | Adresse courante | x | |
| sélection | Drapeau de sélection | | x |
| état | Etat courant | | |
| canalld | Canal traversé | x | |
| périphériqueld | Périphérique gérant le canal traversé | | |

A un instant donné, une connexion peut se trouver dans un des états courants suivants:
- ATTENTE (en attente de routage logique);
- PROGRÈS (en cours de routage physique);
- ALERTE (en attente d'établissement, les routages logique et physique étant terminés);
- CONNECTE (connexion établie);
- ÉCHEC (la connexion va être supprimée).
L'état ATTENTE indique que le routage de la connexion n'est pas terminé et que son adresse courante n'est pas définitive, Cette situation correspond en particulier au cas d'une connexion enregistrée dans une file, en attente de distribution sur un poste d'opérateur.
L'état PROGRÈS indique que le routage logique de la connexion est achevé et que son adressage physique est en cours. (acheminement à travers un réseau de télécommunication).
L'état ALERTE indique que les routages logique et physique de la connexion sont terminés, et que celle-ci est en attente d'établissement (typiquement, il s'agit de la phase de sonnerie du poste cible).
L'état CONNECTE indique la connexion est établie et opérationnelle.
L'état ÉCHEC indique la connexion est sur le point d'être supprimée.
- Un appel (Tableau IV) est un objet qui permet l'association de plusieurs connexions entre elles. Une de ses propriétés est constituée par la liste des connexions qui lui sont associées. Un appel est souvent associé à deux connexions. C'est le cas d'une communication téléphonique normale établie entre deux extrémités. Dans le cas d'une communication en conférence, un appel est associé à autant de connexions qu'il y a de participants à la conférence.
Un appel possède également un champ de données pouvant être transmises au cours d'une communication et éventuellement transférées à une autre application. Les données peuvent concerner le contexte dans lequel se déroule la communication.

**Tableau IV**

| APPEL | | | |
|---|---|---|---|
| Propriété | Caractéristique | Ressources | |
| | | Créer | Modifier |
| id | Identificateur | | |
| donnéesPrivées | Données d'application | x | x |
| connexionld | Liste des connexions appartenant à l'appel | | |

- **Les objets d'adressage physiques.**
Ces objets sont également de quatre types: les périphériques, les canaux, les multiplex et les routes sortantes.
- Un **périphérique** (Tableau V) est un objet capable de gérer un certain nombre de canaux. Typiquement, un périphérique est constitué par une ligne téléphonique.
Ses propriétés principales sont son identificateur, un nom symbolique, et sa capacité. Cette dernière définit le nombre maximal de canaux que peut gérer ce périphérique.

**Tableau V**

| PÉRIPHÉRIQUE | | | |
|---|---|---|---|
| ^{Propriété} | ^{Caractéristique} | ^{Ressources} | |
| | | Créer | Modifier |
| id | Identificateur | | |
| nom | Nom symbolique | x | x |
| capacité | Nombre maximal de canaux | x | x |

- Un **canal** (Tableau VI) est un objet qui décrit une communication physique, et qui est associé à un périphérique.

**Tableau VI**

| CANAL | | | |
|---|---|---|---|
| Propriété | Caractéristique | Ressources | |
| | | Créer | Modifier |
| id | Identificateur | | |
| nomPériph | Périphérique de gestion | x | |
| adresseLocale | Adresse locale | x | x |
| adresseDistante | Adresse distante | x | x |
| état | Etat courant | | |
| connexionld | Liste des connexions traversantes | | |

Il peut également être associé à zéro, une ou plusieurs connexions par l'intermédiaire d'un objet de type multiplex. Un canal possède un identificateur. Figurent parmi ses propriétés le nom du périphérique qui le gère, ainsi que ses deux adresses d'extrémités, locale et distante. Dans le domaine de la téléphonie, cette dernière est formée du numéro distant. La propriété état définit l'état courant de la ligne à un instant donné. Enfin, la propriété connexionId comprend la liste de toutes les connexions qui traversent le canal.
- Un **multiplex** est un objet qui définit la capacité d'un canal à être associé à zéro, une ou plusieurs connexions.
Un multiplex comporte en outre un identificateur et une expression de sélection d'adresse. Cette dernière est, dans le domaine de la téléphonie, le numéro de téléphone associé au canal du multiplex.

**Tableau VII**

| MULTIPLEX | | | |
|---|---|---|---|
| Propriété | Caractéristique | Ressources | |
| | | Créer | Modifier |
| id | identificateur | | |
| adresse | Expression de sélection | x | x |
| capacité | Nombre Maximal de connexions | x | x |

- Une **route sortante** associe une classe d'adresses physiques à un ensemble ordonné de périphériques. Typiquement, une route sortante permet de déterminer que telle classe de numéros téléphoniques, par exemple les numéros internationaux, devront dans la mesure du possible être acheminés sur telles lignes téléphoniques, par exemple sur celles reliées à un opérateur de réseau particulier dont les tarifs longue distance sont avantageux. La route sortante comporte un identificateur. La propriété adresse définit la classe d'adresses qu'elle concerne. La liste des périphériques définit de manière ordonnée les périphériques pouvant être utilisés pour cette classe d'adresses.

**Tableau VIII**

| ROUTE SORTANTE | | | |
|---|---|---|---|
| Propriété | Caractéristique | Ressources | |
| | | Créer | Modifier |
| id | Identificateur | | |
| adresse | Adresse | x | x |
| listePériph | Liste des périphériques | x | x |

**L'organisation des objets d'adressage logique.**

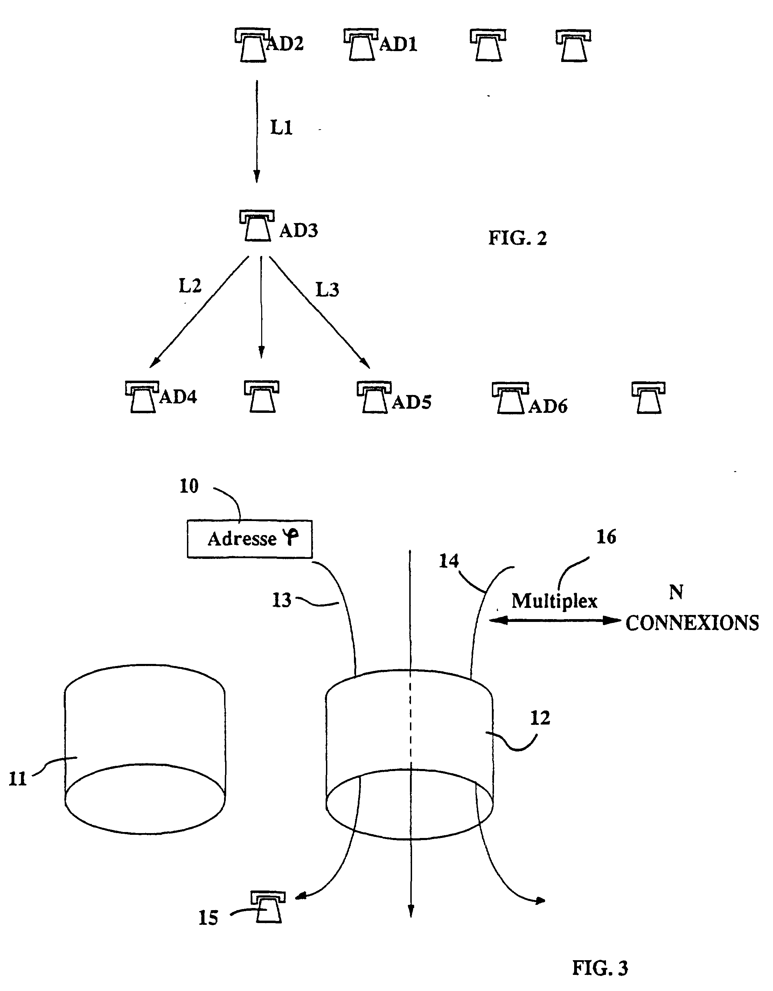

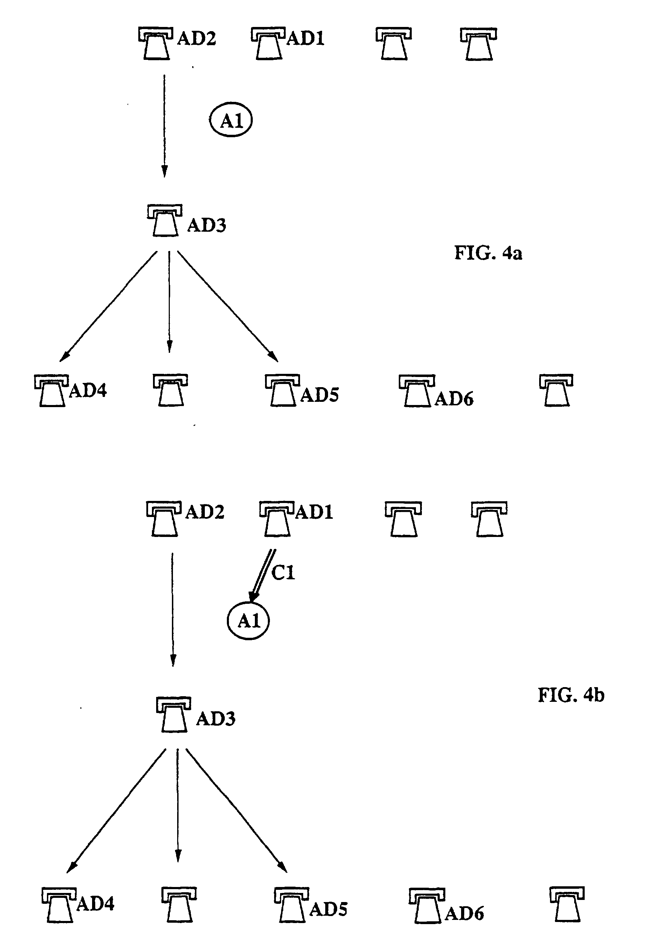

On voit à la figure 2 le schéma du graphe d'adressage logique d'un système selon l'invention appliqué à la gestion d'une installation téléphonique. Ce schéma correspond au cas où l'ensemble de l'installation est au repos. On verra ci-après, en liaison avec les figures 4a à 4f, des exemples de fonctionnement de cette installation.

Les objets de type adresse sont ici représentés symboliquement par des postes téléphoniques associés à leurs adresses logiques. Seules les adresses logiques AD1 à AD6 ont été indiquées.

On conviendra par exemple que l'adresse logique AD1 correspond à des lignes extérieures. Ainsi, la source d'un appel entrant sera affectée à cette adresse logique. De même, lorsqu'un numéro sera composé localement commençant par le préfixe 0, dont il aura été convenu que c'est celui qui doit être composé pour prendre une ligne extérieure, une connexion sera crée en direction de cette adresse logique.

On conviendra également que l'adresse logique AD2 correspond à un standard téléphonique.

On observe enfin sur cette figure que des liens entre adresses ont été créés indépendamment de tout appel. Ces liens sont représentés par des flèches reliant certaines de ces adresses. Plus particulièrement un lien L1 relie l'adresse AD2 correspondant au standard à l'adresse AD3, qui est elle-même reliée par des liens L2,...L3 à une pluralité d'adresses AD4,...AD5. On verra ci-après que ces liens matérialisent une hiérarchie correspondant ici à un groupement de postes.

### L'organisation des objets d'adressage physique.

Cette organisation est illustrée à la figure 3.

A une adresse physique 10 donnée, typiquement un numéro de téléphone, sont associés par un objet de type route sortante un certain nombre de périphériques possibles 11,...12, des lignes téléphoniques dans le cas présent. En d'autres termes, on définit des périphériques différents selon le type d'adresse physique.

A titre d'exemple, on peut prévoir une route sortante contenant 16 périphériques pour l'établissement d'appels locaux, une autre contenant 4 périphériques pour les appels nationaux, et une dernière contenant 2 périphériques pour les appels internationaux.

Chacun de ces périphériques est susceptible de gérer un certain nombre de canaux, à savoir 13,... 14 dans le cas du périphérique 12. Un de ces canaux, ici le canal 13, est utilisé pour connecter l'adresse physique, typiquement le poste local, au poste distant 15.

Par ailleurs, un objet de type multiplex 16 permet de spécifier, pour une adresse physique donnée, le nombre de connexions pouvant être établies sur un même canal, typiquement sur une même communication téléphonique.

Par exemple, un poste intérieur, qui peut généralement posséder deux connexions simultanées, sera typiquement associé à un multiplex de capacité 2. Dans le cas d'un poste extérieur, la capacité d'un multiplex sera, comme pour un poste intérieur, généralement positionnée à 2, pour permettre la gestion de deux communications sur ce poste.

A l'inverse, un numéro extérieur quelconque sera typiquement associé à un multiplex de capacité 1. Un canal sera dans ce cas établi pour chaque appel destiné à ce numéro.

Enfin, un poste d'opérateur sera en général associé à un multiplex de capacité supérieure à 2, par exemple 8, correspondant au nombre maximal de communications simultanément gérées sur ce poste.

### Gestion des objets d'adressage logique

On voit aux figures 4a à 4f le déroulement d'une communication au niveau des objets d'adressage logique.

On suppose qu'un appel entrant arrive à partir de la situation de la figure 2. La première action entreprise est la création d'un appel (figure 4a). On adressera donc au noyau 1 une commande du type
*créer (appel, A1)*

On a supposé ci-dessus que la seule propriété fournie en argument de la commande était l'identificateur de l'appel créé, les autres étant prises par défaut. Il pourrait bien entendu en être autrement. En particulier, les identificateurs seront en général assignés automatiquement.

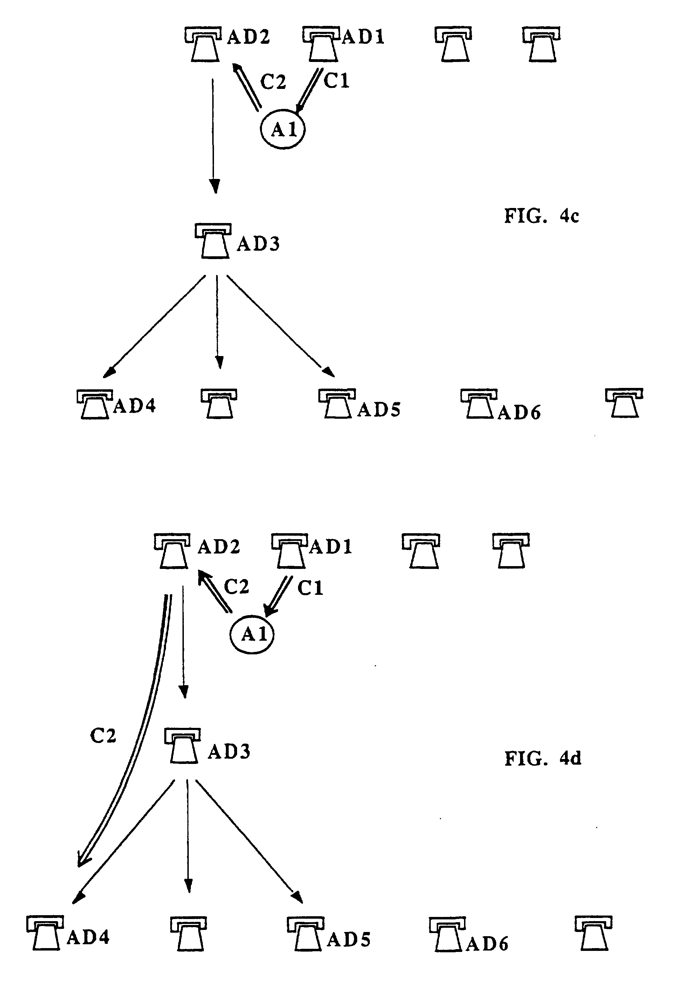

Il s'agit ensuite de créer deux connexions appartenant à l'appel AI, l'une associant à cet appel l'adresse logique AD1 correspondant aux appels extérieurs (figure 4b), l'autre associant à cet appel l'adresse logique AD2 correspondant au standard (figure 4c). Soit, par exemple
*créer (connexion, C1, A1, AD1, A1)* et
*créer (connexion, C2, A1, A1,AD2)*

On suppose maintenant que le numéro appelé est celui du groupement de lignes correspondant aux adresses logiques AD4,...AD5, gérées à partir de l'adresse logique AD3. Si l'on souhaite acheminer finalement l'appel sur le poste (adresse physique) correspondant à l'adresse logique AD4 (figure 4d), on pourra adresser la commande suivante au noyau 1
*modifier (connexion, C2, AD2, AD3)* qui générera enfin
*modifier (connexion, C2, AD3, AD4)*

On observera qu'il existe généralement plusieurs possibilités pour aboutir au résultat recherché. C'est ainsi qu'on peut envisager de remplacer des commandes *modifier* par des couples de commandes *supprimer, créer.*

On suppose maintenant que le poste correspondant à l'adresse logique AD4 est programmé pour un renvoi (sur non réponse, sur occupation ou immédiat) vers le poste correspondant à l'adresse logique AD5 (figure 4e). Une commande du type suivant est alors générée
*modifier (connexion, C2*, *AD4, AD5)*

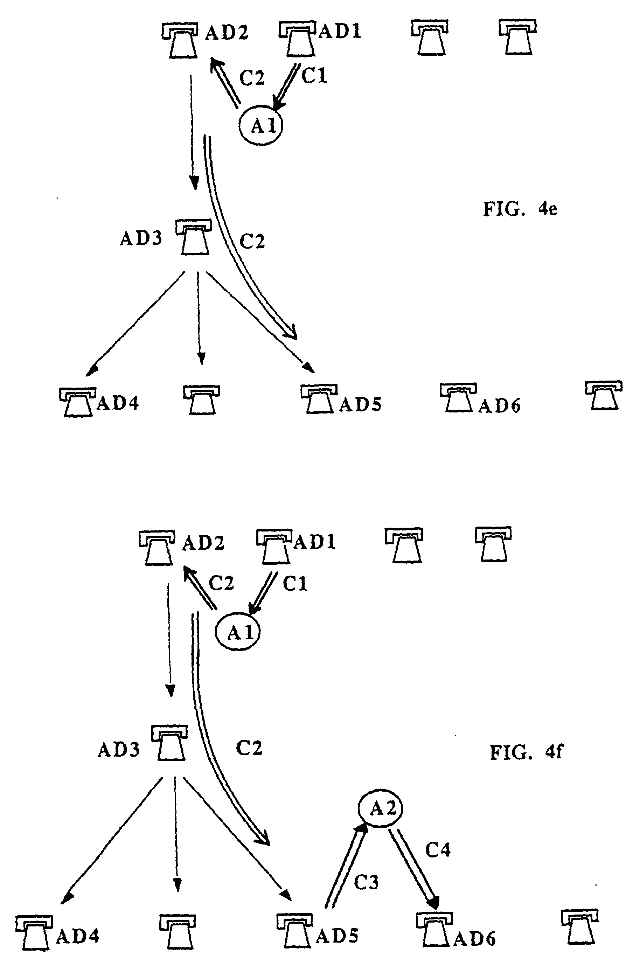

La figure 4f illustre le cas où l'opérateur du poste correspondant à l'adresse logique AD5 souhaite alors entrer en communication avec celui du poste correspondant à l'adresse logique AD6. On met alors en attente la communication extérieure par une commande du type
*modifier (connexion, C2, sélection)*
puis on crée comme précédemment un nouvel appel A2 et deux nouvelles connexions C3 et C4 appartenant à cet appel.

On observera qu'une conférence à trois entre l'appelant extérieur et les opérateurs des postes correspondant aux adresses logiques AD5 et AD6 aurait été possible en s'abstenant de désélectionner la connexion C2 et en créant directement une nouvelle connexion entre A1 et AD6.

Il est mis fin à la communication entre AD5 et AD6 par les commandes
*supprimer (connexion, C3)*
*supprimer (connexion, C4)*
et
*supprimer (appel, A2)*

Enfin, l'appel A2 aurait pu ne pas être supprimé, en vue de l'exportation pour leur utilisation ultérieure de données d'application. On est dans ce cas en présence d'un appel sans connexion.

### Gestion des appels

### Appels sortants

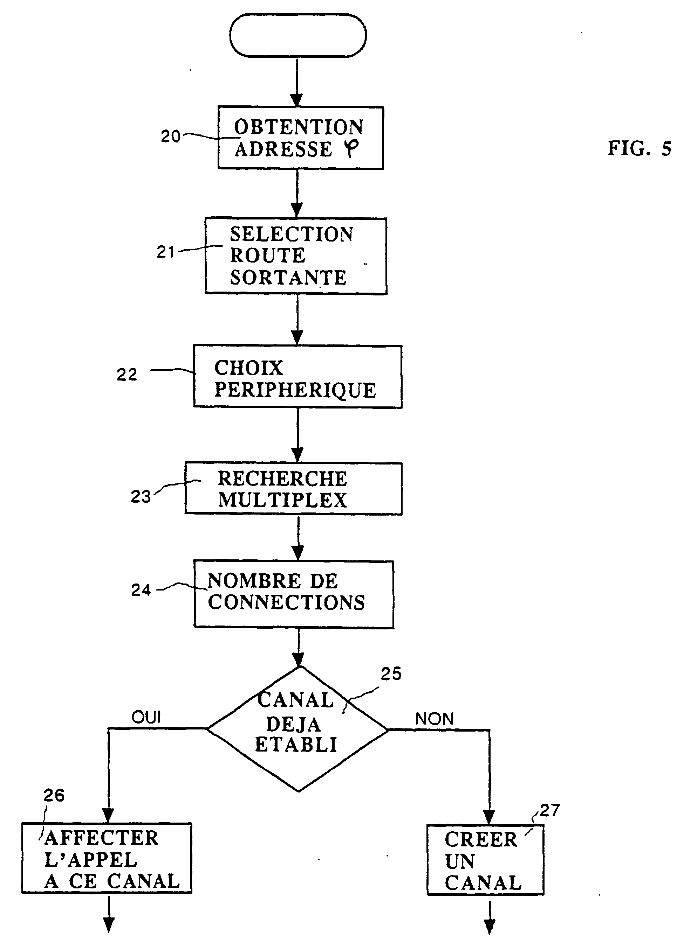

L'organigramme de la figure 5 est celui de la gestion d'un appel sortant.

Lorsqu'une communication doit être établie vers une adresse physique donnée, on exécute les étapes suivante:
- recherche d'une route sortante;
- recherche d'un périphérique;
- recherche d'un multiplex.

Le processus commence par l'obtention en 20 de l'adresse physique associée à l'adresse logique courante de la connexion associée à l'appel.

On sélectionne alors en 21 une route sortante en fonction de la classe de l'adresse physique obtenue, ce qui permet d'obtenir un ensemble de périphériques (propriété listePériph) autorisés pour émettre l'appel.

On sélectionne alors en 22 un de ces périphériques, en général le premier disponible dans la liste.

L'étape suivante consiste à rechercher un multiplex, en 23. Cette recherche s'effectue à partir de la propriété adresse des objets multiplex, qui correspond à l'adresse physique du numéro appelé.

Le multiplex trouvé permet de spécifier en 23, pour cette adresse, combien de connexions peuvent être établies sur un même canal.

Une fois une route sortante et un multiplex trouvés pour le numéro demandé, on peut:
- soit affecter en 26 l'appel à un canal déjà établi, trouvé en 25,
- soit créer un nouveau canal en 27.

Le premier cas se produit si le multiplex trouvé a une capacité strictement supérieure à 0, qu'un canal est déjà créé (établi ou en cours d'établissement) vers le numéro demandé pour l'un des périphériques de la route sortante, et que ce canal ne possède pas déjà le maximum de connexions autorisées par le multiplex.

Un canal est créé dans tous les autres cas.

On remarquera que le périphérique choisi doit être disponible et ne doit pas être saturé (nombre maximal de canaux qu'il est capable de gérer).

### Appels entrants

Tous les appels entrants sont traités de la même manière, qu'il s'agisse d'appels intérieurs (décrochage d'un poste local) ou d'appels extérieurs reçus depuis le réseau public.

Les appels entrants sont gérés comme les appels sortants, à l'exception de la sélection d'une route sortante (on connaît déjà le périphérique).

Quel que soit le traitement qui lui est appliqué, un appel provoque toujours la création d'un nouveau canal.

## Revendications

1. Système de commutation de données entre les terminaux d'un réseau de communication, comprenant:
- des moyens de mémorisation (2) et de gestion (3) pour mémoriser un modèle dudit réseau et gérer ce modèle au cours de son évolution dans le temps, ledit modèle étant constitué par un ensemble d'objets (Oi) qui sont représentatifs des éléments matériels du réseau à un instant donné et qui possèdent des propriétés (Pj) définissant les caractéristiques de ces éléments à cet instant,
- des moyens (9) de manipulation des objets aptes à créer de nouveaux objets, à modifier des objets existants, ou à supprimer des objets existants dans ledit modèle, et
- une interface (9) entre les moyens de gestion et de mémorisation et lesdits éléments matériels du réseau,
***caractérisé par le fait que*** ledit modèle est constitué d'une classe d'objets d'adressage logique comportant notamment des objets de type adresse, et d'une classe d'objets d'adressage physique, lesdites classes étant liées au niveau desdits objets de type adresse qui possèdent chacun parmi leurs propriétés une adresse logique et une adresse physique.

2. Système de commutation de données selon la Revendication 1, dans lequel la classe d'objets d'adressage logique comprend lesdits objets de type adresses (ADi) formant les noeuds d'un graphe d'adressage logique, des liens (Li) formant des transitions dirigées entre une adresse logique source et une adresse logique cible du graphe d'adressage logique, des connexions (Ci) constituées par un ensemble linéaire de liens connectés, et des appels (Ai) constitués par l'association de plusieurs connexions.

3. Système de commutation de données selon l'une quelconque des Revendications 1 et 2, dans lequel une adresse possède comme propriété, outre ses adresses logique et physique, une capacité définissant le nombre de connexions pouvant la référencer.

4. Système de commutation de données selon l'une quelconque des Revendications 2 et 3, dans lequel un lien possède comme propriété, outre les références à son adresse source et à son adresse cible, une capacité définissant le nombre de connexions pouvant le traverser.

5. Système de commutation de données selon l'une quelconque des Revendications 2 à 4, dans lequel une connexion possède comme propriété un état, caractéristique de l'avancement de son évolution.

6. Système de commutation de données selon l'une quelconque des Revendications 2 à 5, dans lequel une connexion possède comme propriété une référence à l'appel auquel elle est associée.

7. Système de commutation de données selon l'une quelconque des Revendications 5 et 6, dans lequel une connexion peut être en cours de routage logique, en cours de routage physique, en attente d'établissement, les routages logique et physique étant terminés, établie, ou en cours de suppression, la propriété d'état définissant cette caractéristique.

8. Système de commutation de données selon l'une quelconque des Revendications 2 à 7, dans lequel un appel possède comme propriété une liste des connexions qu'il associe.

9. Système de commutation de données selon l'une quelconque des Revendications 1 à 8, dans lequel la classe d'objets d'adressage physique comprend des périphériques (11,12), objets capables de gérer un certain nombre de canaux, ces canaux (13), aptes à décrire une communication physique et associés chacun à un périphérique, et des multiplex (16), définissant la capacité d'un canal à être associé à zéro, une ou plusieurs connexions.

10. Système de commutation de données selon l'une quelconque des Revendications 1 à 9, dans lequel la classe d'objets d'adressage physique comprend en outre des routes sortantes, agencées pour associer un ensemble d'adresses physiques à un ensemble ordonné de périphériques.

11. Système de commutation de données selon l'une quelconque des Revendications 9 et 10, dans lequel un périphérique possède comme propriété une capacité définissant le nombre maximal de canaux qu'il est susceptible de gérer.

12. Système de commutation de données selon l'une quelconque des Revendications 9 à 11, dans lequel un canal possède comme propriétés une adresse locale et une adresse distante définissant les deux adresses d'extrémité de la communication physique qu'il décrit.

13. Système de commutation de données selon l'une quelconque des Revendications 9 à 12, dans lequel un canal comporte également une liste des connexions qui le traversent.

14. Procédé de gestion d'un appel sortant à l'aide d'un système de commutation de données, ***caractérisé en ce*** *que* ledit système de commutation de données est modélisé sous une forme comprenant :
- une classe d'objets d'adressage physique incluant des périphériques (11, 12), objets capables de gérer un certain nombre de canaux, ces canaux (13), aptes à décrire une communication physique et associés chacun à un périphérique, des routes sortantes chacune associant une classe d'adresses physiques à un ensemble ordonné de périphériques et des multiplex (16), définissant la capacité d'un canal à être associé à zéro, une ou plusieurs connexions,
- une classe d'objets d'adressage logique incluant des objets de type adresses (ADi) formant les noeuds d'un graphe d'adressage logique, des liens (Li) formant des transitions dirigées entre une adresse logique source et une adresse logique cible du graphe d'adressage logique, et des connexions (Ci) constituées par un ensemble linéaire de liens connectés,
- lesdites classes étant liées au niveau desdits objets de type adresse qui possèdent chacun parmi leurs propriétés une adresse logique et une adresse physique, et en ce que ledit procédé, lorsqu'une communication doit être établie vers une adresse physique donnée, comprend les étapes consistant à:
- sélectionner (21) une route sortante en fonction de ladite adresse physique donnée;
- choisir (22) un périphérique parmi l'ensemble défini par la route sortante sélectionnée;
- rechercher (23) un multiplex associé à ladite adresse physique donnée;
- spécifier (24) à partir de ce multiplex combien de connexions peuvent être établies sur un même canal; et
- affecter (26) l'appel à un canal déjà établi si le multiplex trouvé a une capacité strictement supérieure à 0, et qu'un canal est déjà créé vers ladite adresse physique donnée, pour l'un des périphériques de la route sortante sélectionnée; ou
- créer (27) un nouveau canal dans le cas contraire.

## Patentansprüche

1. System für die Datenkommunikation zwischen den Endgeräten eines Kommunikationsnetzes, mit:
- Speicher- (2) und Steuermitteln (3) zum Speichern eines Modells des Netzes und zum Steuern dieses Modells im Laufe seiner zeitlichen Wandlung, wobei das Modell aus einer Menge von Objekten (Oi) gebildet ist, die Hardware-Elemente des Netzes zu einem gegebenen Zeitpunkt repräsentieren und Eigenschaften (Pj) besitzen, die die Charakteristiken dieser Elemente zu diesem Zeitpunkt definieren,
- Mitteln (9) zum Bearbeiten der Objekte, die neue Objekte erzeugen können, vorhandene Objekte modifizieren können oder vorhandene Objekte im Modell aufheben können, und
- einem Interface (9) zwischen den Steuer- und Speichermitteln und den Hardware-Elementen des Netzes,
dadurch **gekennzeichnet**,
daß das Modell aus einer Klasse von Objekten mit logischer Adressierung, die vor allem Objekte des Adressentyps enthalten, sowie aus einer Klasse von Objekten mit physikalischer Adressierung gebildet ist, wobei diese Klassen auf der Ebene der Objekte des Adressentyps, die unter ihren Eigenschaften jeweils eine logische Adresse und eine physikalische Adresse aufweisen, verbunden sind.

2. System für die Datenkommunikation nach Anspruch 1, bei dem die Klasse der Objekte mit logischer Adressierung die Objekte (ADi) des Adressentyps, die die Knoten eines Graphen für logische Adressierung bilden, Verbindungsglieder (Li), die die gerichteten Übergänge zwischen einer logischen Quelladresse und einer logischen Zieladresse des Graphen für logische Adressierung bilden, Verbindungen (Ci), die durch eine lineare Menge von miteinander verbundenen Verbindungsgliedern gebildet sind, und Anrufe (Ai), die durch die Zuordnung mehrerer Verbindungen gebildet sind, aufweist.

3. System für die Datenkommunikation nach einem der Ansprüche 1 und 2, bei dem eine Adresse als Eigenschaft neben ihren logischen und physikalischen Adressen eine Kapazität aufweist, die die Anzahl der Verbindungen definiert, die auf sie Bezug nehmen können.

4. System für die Datenkommunikation nach einem der Ansprüche 2 und 3, bei dem ein Verbindungsglied als Eigenschaft neben den Bezugnahmen auf seine Quelladresse und seine Zieladresse eine Kapazität aufweist, die die Anzahl der Verbindungen definiert, die über das Verbindungsglied laufen können.

5. System für die Datenkommunikation nach einem der Ansprüche 2 bis 4, bei dem eine Verbindung als Eigenschaft einen Zustand aufweist, der für den Fortschritt ihrer Wandlung charakteristisch ist.

6. System für die Datenkommunikation nach einem der Ansprüche 2 bis 5, bei dem eine Verbindung als Eigenschaft eine Bezugnahme auf den Anruf, dem sie zugeordnet ist, aufweist.

7. System für die Datenkommunikation nach einem der Ansprüche 5 und 6, bei dem eine Verbindung entlang einer logischen Leitweglenkung oder entlang einer physikalischen Leitweglenkung erfolgen kann, wobei bei einem Aufbau der Verbindung die logischen und physikalischen Leitweglenkungen beendet, aufgebaut oder momentan unterdrückt werden, wobei die Eigenschaft des Zustands diese Charakteristik definiert.

8. System für die Datenkommunikation nach einem der Ansprüche 2 bis 7, bei dem ein Anruf als Eigenschaft eine Liste der Verbindungen, die er zuordnet, aufweist.

9. System für die Datenkommunikation nach einem der Ansprüche 1 bis 8, bei dem die Klasse von Objekten mit physikalischer Adressierung Peripheriegeräte (11, 12), Objekte, die eine bestimmte Anzahl von Kanälen steuern können, wobei diese Kanäle (13) zur Beschreibung einer physikalischen Verbindung ausgelegt und jeweils einem Peripheriegerät zugeordnet sind, sowie Multiplexer (16) umfaßt, die die Kapazität eines Kanals definieren, dem keine, eine oder mehrere Verbindungen zuordenbar sind.

10. System für die Datenkommunikation nach einem der Ansprüche 1 bis 9, bei dem die Klasse von Objekten mit physikalischer Adressierung außerdem Ausgangsrouten aufweist, die so beschaffen sind, daß sie eine Menge physikalischer Adressen einer geordneten Menge Peripheriegeräte zuordnen.

11. System für die Datenkommunikation nach einem der Ansprüche 9 und 10, bei dem ein Peripheriegerät als Eigenschaft eine Kapazität besitzt, die die maximale Anzahl an Kanälen definiert, die es steuern kann.

12. System für die Datenkommunikation nach einem der Ansprüche 9 bis 11, bei dem ein Kanal als Eigenschaften eine lokale Adresse und eine entfernte Adresse besitzt, die die beiden Endadressen der physikalischen Verbindung definieren, die er beschreibt.

13. System für die Datenkommunikation nach einem der Ansprüche 9 bis 12, bei dem ein Kanal ebenfalls eine Liste der Verbindungen, die über ihn laufen, enthält.

14. Verfahren zum Steuern eines abgehenden Anrufs mit Hilfe eines Datenkommunikationssystems,
dadurch **gekennzeichnet**,
daß das Datenkommunikationssystem in einer Form modelliert wird, die aufweist:
- eine Klasse von Objekten mit physikalischer Adressierung, die Peripheriegeräte (11, 12), Objekte, die eine bestimmte Anzahl von Kanälen steuern können, wobei diese Kanäle (13) zur Beschreibung einer physikalischen Verbindung ausgelegt und jeweils einem Peripheriegerät zugeordnet sind, Ausgangsrouten, von denen jede eine Klasse physikalischer Adressen einer geordneten Menge Peripheriegeräte zuordnet, sowie Multiplexer (16) umfaßt, die die Kapazität eines Kanals definieren, dem keine, eine oder mehrere Verbindungen zuordenbar sind,
- eine Klasse von Objekten mit logischer Adressierung, die Objekte (ADi) des Adressentyps, die die Knoten eines Graphen für die logische Adressierung bilden, Verbindungsglieder (Li), die die gerichteten Übergänge zwischen einer logischen Quelladresse und einer logischen Zieladresse des Graphen für die logische Adressierung bilden, und Verbindungen (Ci) umfaßt, die durch eine lineare Menge miteinander verbundener Verbindungsglieder gebildet sind,
- wobei die Klassen auf der Ebene der Objekte des Adressentyps, die jeweils unter ihren Eigenschaften eine logische Adresse und eine physikalische Adresse besitzen, verbunden sind, und daß das Verfahren dann, wenn eine Verbindung ausgehend von einer gegebenen physikalischen Adresse aufgebaut werden soll, die Schritte umfaßt:
- in Abhängigkeit von der gegebenen physikalischen Adresse einer Ausgangsroute auszuwählen (21);
- aus der durch die gewählte Ausgangsroute definierten Menge ein Peripheriegerät zu wählen (22);
- einen Multiplexer, der der gegebenen physikalischen Adresse zugeordnet ist, zu suchen (23);
- anhand dieses Multiplexers zu spezifizieren, wieviele Verbindungen auf demselben Kanal geschaffen werden können; und
- den Anruf einem bereits gebildeten Kanal zuzuweisen (26), wenn der gefundene Multiplexer eine Kapazität besitzt, die strikt größer als 0 ist und bereits ein Kanal zu der gegebenen physikalischen Adresse für eines der Peripheriegeräte der gewählten Ausgangsroute erzeugt worden ist; oder
- im entgegengesetzten Fall einen neuen Kanal zu erzeugen (27).

## Claims

1. System for switching data between the terminals of a communication network, comprising:
- memory (2) and management (3) means for storing a model of the said network and managing this model during its development over time, the said model being constituted by a set of objects (Oi) which are representative of the hardware components of the network at a given moment and which possess properties (Pj) defining the characteristics of these elements at that moment,
- means (9) for manipulating the objects and adapted to create new objects, modify existing objects, or delete existing objects in the said model, and
- an interface (9) between the memory and management means and the said hardware elements of the network, **characterised by the fact that** the said model is constituted of a class of logical addressing objects comprising in particular address-type objects, and a class of physical addressing objects, the said classes being associated at the level of the said address-type objects which each possess among their properties a logic address and a physical address.

2. Data switching system according to claim 1, in which the class of logical addressing objects comprises the said address-type objects (ADi) forming nodes of a logical addressing graph, links (Li) forming directed transitions between a source logic address and a target logic address of the logic addressing graph, connections (Ci) constituted by a linear set of connected links, and calls (Ai) constituted by the association of several connections.

3. Data switching system according to any one of claims 1 and 2, in which an address has as a property, besides its logic and physical addresses, a capacity defining the number of connections which may be associated therewith.

4. Data switching system according to any one of claims 2 and 3, in which a link has as a property, apart from the references to its source address and target address, a capacity defining the number of connections which may pass therethrough.

5. Data switching system according to any one of claims 2 to 4, in which a connection has as a property a state, characteristic of the progress of its development.

6. Data switching system according to any one of claims 2 to 5, in which a connection has as a property a reference to a call with which it is associated.

7. Data switching system according to any one of claims 5 and 6, in which a connection may be undergoing logical routing, undergoing physical routing, awaiting establishment, the physical and logical routings being terminated, established, or in the process of being eliminated, the state property defining this characteristic.

8. Data switching system according to any one of claims 2 to 7, in which a call has as a property a list of the connections associated therewith.

9. Data switching system according to any one of claims 1 to 8, in which the class of physical addressing objects comprises peripherals (11, 12), objects capable of managing a certain number of channels, these channels (13), adapted to describe a physical communication and each associated with a peripheral, and multiplexes (16), defining the capacity of a channel to be associated with zero, one or several connections.

10. Data switching system according to any one of claims 1 to 9, in which the class of physical addressing objects additionally comprises outgoing routes, arranged to associate a set of physical addresses with an ordered set of peripherals.

11. Data switching system according to any one of claims 9 and 10, in which a peripheral has as a property a capacity defining the maximum number of channels which it is capable of managing.

12. Data switching system according to any one of claims 9 to 11, in which a channel has as properties a local address and a remote address defining the two extreme addresses for physical communication carried thereby.

13. Data switching system according to any one of claims 9 to 12, in which a channel also comprises a list of connections passing therethrough.

14. Process for managing an outgoing call with the aid of a data switching system, **characterised in that** said data switching system is modelled in a form comprising:
- a class of physical addressing objects comprising peripherals (11,12), objects capable of managing a certain number of channels, these channels (13), adapted to describe a physical communication and each associated with a peripheral, outgoing routes, each associating a class of physical addresses with an ordered set of peripherals and multiplexes (16), defining the capacity of a channel to be associated with zero, one or several connections,
- a class of logical addressing objects including adress-type objects (ADi) forming the nodes of a logical addressing graph, links (Li) forming directed transitions between a source logic address and a target logic address of the logic addressing graph, and connections (Ci) constituted by a linear set of connected links,
- the said classes being linked at the level of said address-type objects which each have among their properties a logic address and a physical address,
and in that the said process, when communication is to be made with a given physical address, comprises the steps consisting of:
- selecting (21) an outgoing route as a function of the said given physical address;
- choosing (22) a peripheral from the set defined by the selected outgoing route;
- locating (23) a multiplex associated with the said given physical address;
- specifying (24) from this multiplex how many connections may be established on the same channel; and
- allotting (26) the call to a previously-established channel if the located multiplex has a capacity strictly greater than 0, and if a channel is already created toward the said given physical address, for one of the peripherals of the selected outgoing route; or
creating (27) a new channel in the contrary case.
